# EUROPEAN PATENT APPLICATION

(11) **EP 4 717 830 A1**
(43) Date of publication of application: **01.04.2026**
(21) Application number: 24203152.4
(22) Date of filing: 27.09.2024
(51) Int. Cl.: E02F 9/20, B60L 58/10, E02F 9/26

(54) **WORK MACHINE CONTROL METHOD, WORK MACHINE CONTROL PROGRAM, WORK MACHINE DISPLAY SYSTEM, AND WORK MACHINE**

(71) Applicant: Yanmar Holdings Co., Ltd., Osaka-shi, Osaka 530-8311 (JP)
(72) Inventor: CARTON, Alexandre, Saint-Dizier (FR); BOURGADEL, Anthony, Saint-Dizier (FR); MENDOZA, Lemmy, Saint-Dizier (FR); JEANGEORGES, Xavier, Saint-Dizier (FR); MERCEY, Jean-Christophe, Saint-Dizier (FR)
(74) Representative: Sekiguchi, Kazuya

(57) **Abstract**

[Problem] A work machine control method, a work machine control program, a work machine display system, and a work machine that enable to display appropriate information in a case where a work machine is electrified are provided.

[Solution] A work machine control method is a control method of a work machine provided with, as a power source that generates power for driving at least a work unit, an electric motor to be driven by electric power of a battery. The control method includes causing a display unit of a display device to display a display screen Dp1 including a first image G1 related to an output state of the electric motor, and a second image G2 related to a charge state of the battery.

## Description

### TECHNICAL FIELD

The present invention relates to a work machine control method, a work machine control program, a work machine display system, and a work machine that are used for a work machine.

### BACKGROUND ART

As a related art, a work machine (backhoe) provided with a display device has been known (e.g., see Patent Document 1). In a work machine pertaining to the related art, the display device includes a display unit, and an operation unit. A display screen such as a home screen is displayed in the display unit. A selection item display area is disposed in a lower part of the display screen, and various selection items are displayed in the selection item display area.

The operation unit includes a plurality of operation switches disposed below the display unit (below the selection item display area). The plurality of switches are associated with, by one-to-one correspondence, a selection item displayed in the selection item display area. A function that accepts an instruction of selecting an associated one of selection items displayed in the selection item display area is assigned to the plurality of operation switches. That is, each of the plurality of operation switches accepts an instruction of selecting an associated selection item.

### PRIOR ART DOCUMENT

### PATENT DOCUMENT

Patent Document 1: Japanese Patent Application Publication No. 2022-32227

### SUMMARY OF INVENTION

### TECHNICAL PROBLEM

In the related art, electrification of a work machine has not been considered, and appropriate information may not be displayed, in a case where a work machine is electrified.

An object of the present invention is to provide a work machine control method, a work machine control program, a work machine display system, and a work machine that enable to display appropriate information, in a case where a work machine is electrified.

### SOLUTION TO PROBLEM

A work machine control method according to an aspect of the present invention is a control method of a work machine provided with, as a power source that generates power for driving at least a work unit, an electric motor to be driven by electric power of a battery. The control method includes causing a display unit of a display device to display a display screen including a first image related to an output state of the electric motor, and a second image related to a charge state of the battery.

A work machine control program according to an aspect of the present invention is a program that causes one or more processors to execute the work machine control method.

A work machine display system according to an aspect of the present invention includes a display device for a work machine, and a display processing unit. The work machine is provided with, as a power source that generates power for driving at least a work unit, an electric motor to be driven by electric power of a battery. The display processing unit causes a display unit of the display device to display a display screen including a first image related to an output state of the electric motor, and a second image related to a charge state of the battery.

A work machine according to an aspect of the present invention includes the work machine display system, and a machine body on which the display device is loaded.

### ADVANTAGEOUS EFFECTS OF INVENTION

The present invention can provide a work machine control method, a work machine control program, a work machine display system, and a work machine that enable to display appropriate information, in a case where a work machine is electrified.

### BRIEF DESCRIPTION OF DRAWINGS

FIG. 1 is a schematic perspective view illustrating an overall configuration of a work machine according to a first embodiment, as viewed from a front side.
FIG. 2 is a schematic perspective view illustrating an overall configuration of the work machine according to the first embodiment, as viewed from a rear side.
FIG. 3 is a schematic block diagram illustrating the work machine according to the first embodiment.
FIG. 4 is a schematic perspective view illustrating a driving unit of the work machine according to the first embodiment.
FIG. 5 is a schematic external appearance view of a display device of a work machine display system according to the first embodiment.
FIG. 6 is a diagram illustrating an example of a display screen to be displayed by the work machine display system according to the first embodiment.
FIG. 7 is a diagram illustrating an example of a display screen to be displayed by the work machine display system according to the first embodiment.
FIG. 8 is a flowchart illustrating an operation example of the work machine display system according to the first embodiment.

### DESCRIPTION OF EMBODIMENTS

In the following, an embodiment according to the present invention is described with reference to the accompanying drawings. The following embodiment is an example embodying the present invention, and does not limit the technical scope of the present invention.

### (First Embodiment)

### [1] Overall Configuration

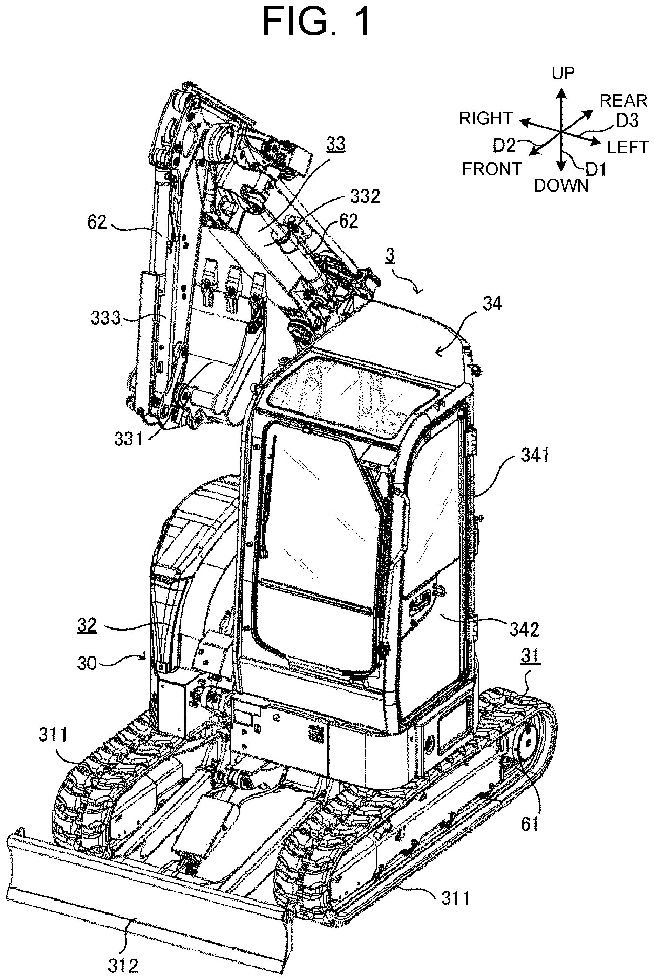

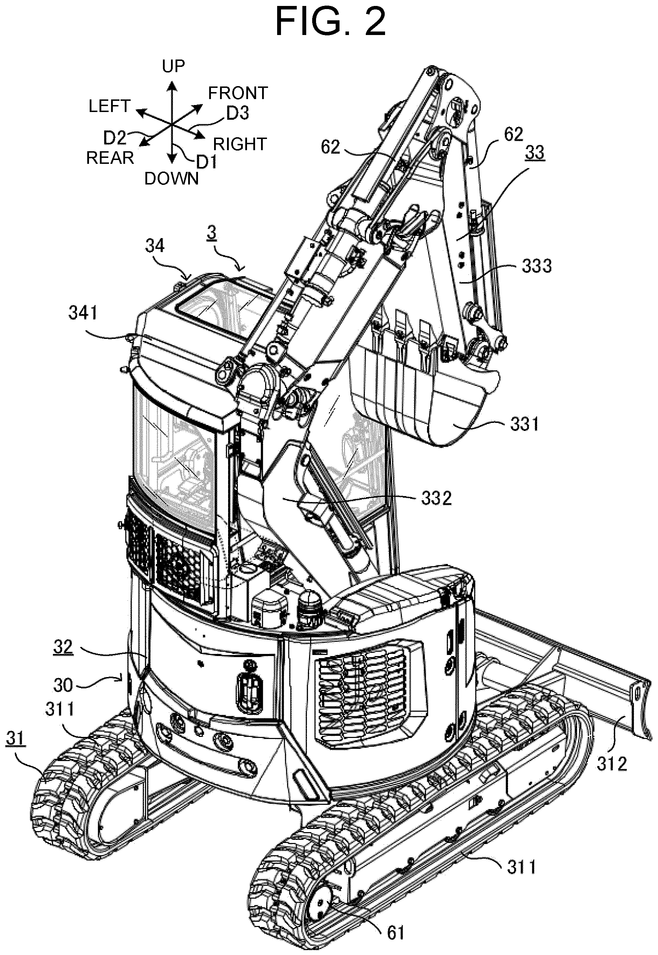

As illustrated in FIGS. 1 and 2, a work machine 3 according to the present embodiment includes a traveling unit 31, a turning unit 32, and a work unit 33. The work machine 3 further includes a driving unit 34 that a passenger can get in. The driving unit 34 includes a driver's seat, which is a seat in which a passenger sits, and the like. In the present embodiment, it is assumed that the traveling unit 31, the turning unit 32, the work unit 33, and the driving unit 34 are included in a machine body 30 of the work machine 3.

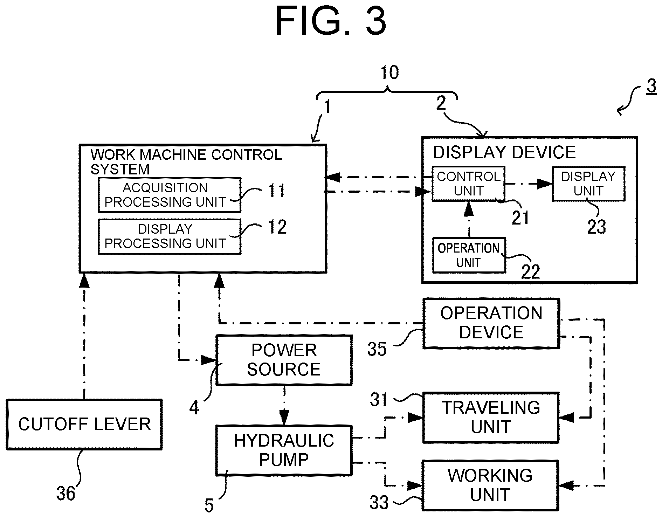

In addition, as illustrated in FIG. 3, the work machine 3 further includes a work machine control system 1 (hereinafter, also simply referred to as a "control system 1"). In addition, the machine body 30 further includes a display device 2, a power source 4, a hydraulic pump 5, an operation device 35, a cutoff lever 36, and various sensors (including a sonar, a camera, and the like), and the like.

A "work machine" mentioned in the present disclosure means a machine for various pieces of work, and, as an example, is a work vehicle such as a backhoe (including a hydraulic shovel, a miniature shovel, and the like), a wheel loader, and a carrier. The work machine 3 includes the work unit 33 that is configured to be able to perform one or more pieces of work. The work machine 3 is not limited to a "vehicle", and, for example, may be a work vessel, a work flying object such as a drone or a multicopter, and the like. Further, the work machine 3 is not limited to a construction machine (construction machinery), and, for example, may be an agricultural machine (agricultural machinery) such as a rice planting machine, a tractor, or a combine. In the present embodiment, unless otherwise specifically noted, a case where the work machine 3 is a ride-on type backhoe, and excavation work, ground leveling work, trench digging work, loading work, or the like can be performed as work is described as an example. More specifically, the work machine 3 according to the present embodiment is assumed to be an "ultra-small turning type" in which the turning unit 32 including the work unit 33 can make a full turn within 120 % of the entire width (entire width of a pair of left and right crawlers 311) of the traveling unit 31, or a "rearward ultra-small turning type" in which a turning radius ratio at a rear end is within 120 %.

Further, in the present embodiment, as an example, it is assumed that a passenger getting in the driving unit 34 is an operator, and the work machine 3 is moved by an operation of the operator. However, the embodiment is not limited to this example, and, for example, the work machine 3 may be movable by a remote operation or autonomous driving. Further, a plurality of passengers may be able to get in the driving unit 34 at the same time. In this case, a plurality of driver's seats may be provided in one driving unit 34.

For convenience of explanation, in the present embodiment, a vertical direction in a state that the work machine 3 is ready for use is defined as an up-down direction D1. Furthermore, a front-rear direction D2 and a left-right direction D3 are defined with respect to a direction viewed from an operator getting in the driving unit 34 of the work machine 3, as a reference. In other words, each direction used in the present embodiment is a direction that is defined with respect to the driving unit 34 of the work machine 3 as a reference, and a direction in which the machine body 30 moves during forward travel of the work machine 3 is a "front side", and a direction in which the machine body 30 moves during backward travel of the work machine 3 is a "rear side". Likewise, a direction in which a front end portion of the machine body 30 moves during right turn of the work machine 3 is a "right side", and a direction in which the front end portion of the machine body 30 moves during left turn of the work machine 3 is a "left side". Since the driving unit 34 is provided in the turning unit 32, the front-rear direction D2 and the left-right direction D3 with respect to the traveling unit 31 change as the turning unit 32 turns. In the following, as illustrated in FIG. 1, a direction is defined in a state in which a front surface of the driving unit 34 faces a traveling direction of the traveling unit 31. However, these directions are not intended to limit a direction of use (direction in use) of the work machine 3.

The work machine 3 is provided with an electric motor serving as the power source 4. An electric motor serving as the power source 4 is driven by receiving electric power supply from a battery (for traveling). The power source 4 generates power for driving at least the work unit 33.

In the work machine 3, for example, the hydraulic pump 5 is driven by the power source 4, and hydraulic oil is supplied from the hydraulic pump 5 to a hydraulic actuator (including a hydraulic motor 61, a hydraulic cylinder 62, and the like) of each unit of the machine body 30, whereby the machine body 30 is driven. The work machine 3 as described above is controlled, for example, when an operator getting in the driving unit 34 of the machine body 30 operates an operation lever and the like of the operation device 35.

In the present embodiment, as described above, it is assumed that the work machine 3 is a ride-on type backhoe. Therefore, the work unit 33 is driven in response to an operation of an operator getting in the driving unit 34, and performs work such as excavation work. The work unit 33 is supported by the turning unit 32 in which the driving unit 34 is provided. Therefore, at a time of turning the turning unit 32, the work unit 33 turns together with the driving unit 34.

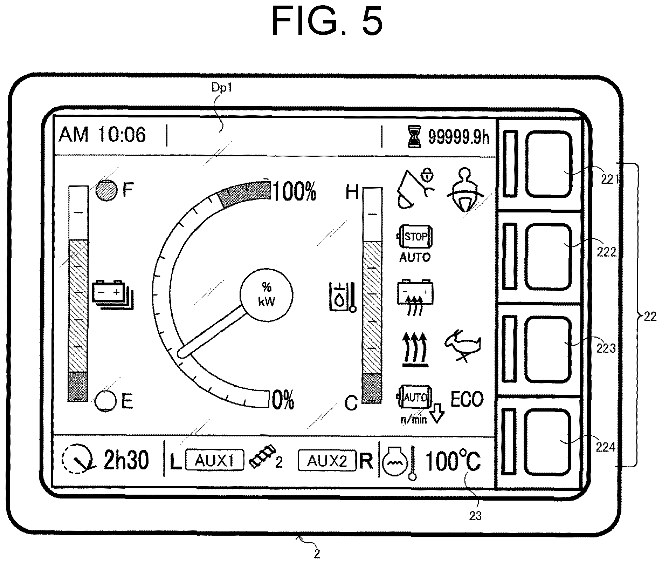

Herein, the operation device 35, the display device 2, and the like are loaded in the driving unit 34 of the machine body 30, and an operator can operate the operation device 35, while viewing various pieces of information related to the work machine 3 to be displayed on the display device 2. As an example, an operator can confirm, on the display device 2, information related to an operating condition of the work machine 3 necessary for operating the operation device 35 by causing to display, on a display screen Dp1 (see FIG. 5) of the display device 2, information related to an operating condition of the work machine 3, such as a hydraulic oil temperature.

The traveling unit 31 includes a traveling function, and is configured to be able to travel on the ground (including turning). The traveling unit 31 includes, for example, the pair of left and right crawlers 311, a blade 312, and the like. The traveling unit 31 further includes the hydraulic motor 61 (hydraulic actuator) for traveling, and the like to drive the crawlers 311.

The turning unit 32 is disposed above the traveling unit 31, and can turn with respect to the traveling unit 31 in a plan view. That is, the turning unit 32 is positioned above the traveling unit 31, and is configured to be able to turn with respect to the traveling unit 31 around a rotation axis along a vertical direction. The turning unit 32 includes a hydraulic motor as a hydraulic actuator for turning, and the like. The power source 4, the hydraulic pump 5, and the like are loaded in the turning unit 32, in addition to the driving unit 34. Further, a boom bracket on which the work unit 33 is mounted is provided in the turning unit 32. The turning unit 32 has a substantially circular shape, in a plan view, in which a front end portion is cut out into a flat shape. The turning unit 32 can turn around a center of the circular shape, as a rotation axis.

The work unit 33 is supported by the turning unit 32, and is configured to be able to perform one or more pieces of work. The work unit 33 is supported by a boom bracket of the turning unit 32, and performs work. The work unit 33 includes a bucket 331. The bucket 331 is one kind of an attachment (work implement) to be mounted on the machine body 30 of the work machine 3, and is constituted of any implement to be selected according to a content of work from among a plurality of kinds of attachments. As an example, the bucket 331 is mounted to be detachable from the machine body 30, and is replaced according to a content of work. Examples of an (end) attachment for the work machine 3 include, in addition to the bucket 331, various implements, such as a breaker, an auger, a crusher, a fork, a fork claw, a steel frame cutter, an asphalt cutting machine, a grass cutter, a ripper, a mulcher, a tilt rotator, and a tamper.

The work unit 33 further includes a boom 332, an arm 333, and hydraulic actuators (including the hydraulic cylinder 62, a hydraulic motor, and the like), and the like. The bucket 331 is mounted on a leading end of the arm 333. The bucket 331 is supported to be rotatable with respect to the arm 333 around a rotation axis along a horizontal direction.

The boom 332 is supported to be rotatable by a boom bracket of the turning unit 32. Specifically, the boom 332 is supported to be rotatable by the boom bracket around a rotation axis along a horizontal direction. The boom 332 has a shape extending upward from a base end portion supported by the boom bracket. The arm 333 is coupled to a leading end of the boom 332. The arm 333 is supported to be rotatable with respect to the boom 332 around a rotation axis along a horizontal direction.

The work unit 33 is moved by receiving power from an electric motor as the power source 4. Specifically, the hydraulic pump 5 is driven by the power source 4 (electric motor), and hydraulic oil is supplied from the hydraulic pump 5 to a hydraulic actuator (such as the hydraulic cylinder 62) of the work unit 33, whereby each unit (the bucket 331, the boom 332, and the arm 333) of the work unit 33 is moved.

In the present embodiment, particularly, the work unit 33 has a multi-joint structure in which the boom 332 and the arm 333 are configured to be individually rotatable. That is, the multi-joint work unit 33 including the boom 332 and the arm 333 is able to perform, for example, stretching or folding movement as a whole by rotating each of the boom 332 and the arm 333 around a rotation axis along a horizontal direction. Further, the bucket 331 as an attachment is supported with respect to the machine body 30 (turning unit 32) via the boom 332 and the arm 333, and the bucket 331 can be opened and closed by rotating the bucket 331 itself with respect to the arm 333.

Each of the traveling unit 31 and the turning unit 32 is also moved by receiving power from an electric motor as the power source 4, as well as the work unit 33. That is, the turning unit 32 and the traveling unit 31 are moved when hydraulic oil is supplied from the hydraulic pump 5 to the hydraulic motor 61 of the traveling unit 31, a hydraulic motor of the turning unit 32, and the like.

The work machine 3 further includes a driving device (mechanism) such as a power take-off (PTO) device for supplying power to the bucket 331 (attachment). Specifically, the driving device sends hydraulic oil from a hydraulic pump to be driven by the power source 4 to the bucket 331, and adjusts a magnitude of power to be supplied to the bucket 331 by adjusting a flow rate of the hydraulic oil.

The driving unit 34 is a space for allowing an operator to get in, and is located above the turning unit 32 in the present embodiment. Therefore, when the turning unit 32 turns in a plan view, the driving unit 34 also turns together with the turning unit 32. Specifically, in a case where the turning unit 32 is divided into two parts in the left-right direction D3, the driving unit 34 is provided in a left portion of the turning unit 32. The driving unit 34 includes at least a driver's seat in which an operator is seated.

As a kind of the driving unit 34 of the work machine 3 such as a construction machine, there are a cabin type, a canopy type, a floor type, and the like. The driving unit 34 of a cabin type includes a cabin 341, and an operator gets in a cabin space inside the cabin 341. The driving unit 34 of a canopy type includes a canopy (roof), and an operator gets in a space below the canopy. The driving unit 34 of a floor type does not include the cabin 341, a canopy, and the like, and an operator gets in a space opened upward. That is, the driving unit 34 may include not only a configuration in which surroundings are surrounded by a panel or the like, but also various configurations prepared as a space that an operator can get in. In the present embodiment, a case where the driving unit 34 is a cabin type is described as an example.

In the present embodiment, the driving unit 34 is located above the left crawler 311 (see FIG. 1). This arrangement allows an operator to get in and out of the driving unit 34 from the left side of the driving unit 34. Therefore, in the present embodiment, a door 342 of the driving unit 34 is disposed on the left side of the driving unit 34 in the left-right direction D3. That is, an operator gets in and out of the driving unit 34 through the door 342 disposed on the left side of the driving unit 34.

The driving unit 34 of a cabin type includes the cabin 341 having a shape that covers a driver's seat. The cabin 341 configures an outer contour of the driving unit 34, and an operator gets in (inside) the cabin 341. The cabin 341 surrounds a cabin space from four sides together with the door 342.

The operation device 35 is disposed in the driving unit 34, and is a user interface that accepts an operation input by an operator. In the present embodiment, as an example, the operation device 35 includes an operation lever and the like that are located on a lateral portion of a front end portion of a driver's seat in the left-right direction D3. This allows an operator in a seated state in a driver's seat to operate the operation device 35 without greatly changing a pose thereof.

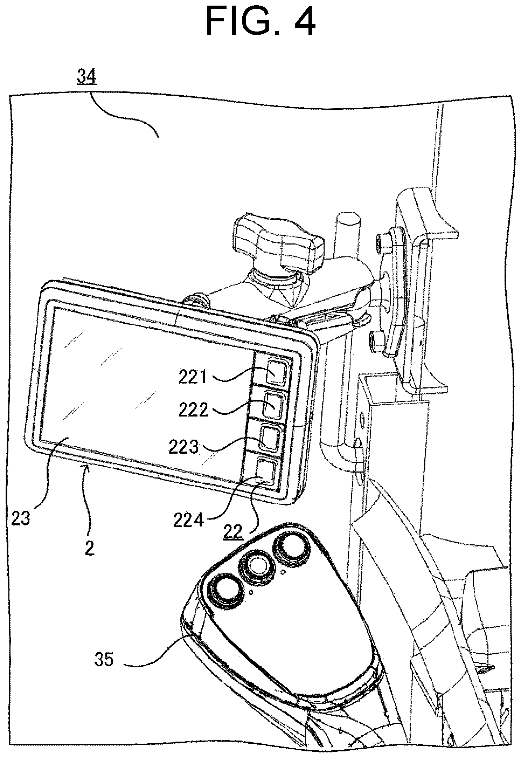

As illustrated in FIG. 4, the display device 2 is disposed in the driving unit 34 of the machine body 30, and is a user interface that accepts an operation input by a user (operator), and outputs various pieces of information to the user. The display device 2 accepts various operations by a user, for example, by outputting an electrical signal according to an operation of the user. This allows a user (operator) to visually recognize the display screen Dp1 (see FIG. 5) to be displayed on the display device 2, and operate the display device 2 according to needs.

As illustrated in FIG. 3, the display device 2 includes a control unit 21, an operation unit 22, and a display unit 23. The display device 2 is configured to be communicable with the control system 1, and is able to transmit and receive data to and from the control system 1. In the present embodiment, as an example, the display device 2 is a dedicated device for use in the work machine 3.

The control unit 21 controls the display device 2 according to data from the control system 1. Specifically, the control unit 21 outputs an electrical signal according to a user operation accepted by the operation unit 22, and causes the display unit 23 to display the display screen Dp1 to be generated by the control system 1.

The operation unit 22 is a user interface that accepts an operation input by a user (operator) with respect to the display screen Dp1 to be displayed on the display unit 23. The operation unit 22 accepts various operations by a user, for example, by outputting an electrical signal according to an operation of the user. In the present embodiment, as an example, as illustrated in FIGS. 4 and 5, the operation unit 22 includes a plurality of (herein, four) push button switches 221 to 224 of a mechanical type. These plurality of push button switches 221 to 224 are disposed adjacent to a display area (on the right side in an example in FIG. 4) in such a way as to align with a peripheral edge of a display area of the display unit 23. These plurality of push button switches 221 to 224 are associated with an item to be displayed on the display screen Dp1, and any one of the items on the display screen Dp1 is operated (selected), when any one of the plurality of push button switches 221 to 224 is operated.

Further, the operation unit 22 may also include a touch panel, an operation dial, and the like. Also in this case, any one of the items on the display screen Dp1 is operated (selected) according to an operation with respect to the operation unit 22.

The display unit 23 is a user interface for presenting information to a user (operator), like a liquid crystal display or an organic EL display that displays various pieces of information. The display unit 23 presents various pieces of information to a user by display. In the present embodiment, as an example, the display unit 23 is a full-color liquid crystal display with a back light, and as illustrated in FIGS. 4 and 5, includes a "laterally long" display area which is long in a lateral direction.

The display device 2 presents, on the display screen Dp1, various pieces of information to a user (operator) operating the work machine 3. That is, a user operating the work machine 3 can visually acquire various pieces of information related to the work machine 3 by viewing the display screen Dp1 to be displayed on the display device 2. As an example, causing the display device 2 to display information related to an operating condition of the work machine 3 such as a traveling speed (vehicle speed), and a hydraulic oil temperature allows a user to confirm, on the display device 2, information related to an operating condition of the work machine 3 necessary for operating the work machine 3.

The cutoff lever 36 is disposed in the driving unit 34 of the machine body 30, and accepts an operation input by an operator. In the present embodiment, as an example, the cutoff lever 36 is operable along the up-down direction D1. In response to an operation of the cutoff lever 36, a control valve disposed on a supply path of a pilot signal is driven, and opening/closing of the supply path of the pilot signal is switched.

Specifically, as far as the cutoff lever 36 is at a "down position", which is a lower end position within a movable range, the control valve is brought to an "unlocked state" in which the control valve opens a flow path. On the other hand, as far as the cutoff lever 36 is at an "up position", which is an upper end position within the movable range, the control valve is brought to a "locked state" in which the control valve shuts off the flow path. Determination as to whether the cutoff lever 36 is at the down position or the up position is monitored by the control system 1.

Further, as far as the control valve is in a locked state, hydraulic oil from the hydraulic pump 5 is not supplied to a hydraulic circuit due to shutoff of a pilot signal. Therefore, at least an actuator of the traveling unit 31 and the work unit 33 is unable to be driven, and the traveling unit 31 and the work unit 33 are forcibly stopped irrespective of an operation of the operation device 35. In this way, as far as the cutoff lever 36 is at the "up position", the work machine 3 is brought to an "operation disabled state" in which at least the traveling unit 31 and the work unit 33 are unable to be operated. On the other hand, as far as the cutoff lever 36 is at the "down position", the work machine 3 is brought to an "operation enabled state" in which the traveling unit 31, the turning unit 32, and the work unit 33 are able to be operated. In this way, the cutoff lever 36 is a lever to be operated when movement of the work machine 3 is locked, and is equivalent to a gate lock lever.

Furthermore, in addition to the above-described configuration, the machine body 30 further includes a detection unit (including a sensor, a camera, and the like) for monitoring the periphery of the machine body 30, a sound output unit, a communication terminal, a battery, and the like. Further, the machine body 30 includes sensors for monitoring an operating condition of the machine body 30, such as a hydraulic oil temperature sensor, a tachometer that measures a traveling speed, and an hour meter that measures operating hours.

### [2] Configuration of Control System

Next, a configuration of the control system 1 according to the present embodiment is described with reference to FIG. 3. The control system 1 causes the display device 2 to display the display screen Dp1 by controlling the display device 2. In other words, in the present embodiment, the control system 1 has a function as a display control system for a work machine that controls at least the display device 2. The control system 1 configures a work machine display system 10 together with the display device 2. In other words, the work machine display system 10 according to the present embodiment includes the control system 1, and the display device 2.

In the present embodiment, the display device 2 is loaded in the machine body 30 of the work machine 3 as described above. The control system 1 is a constituent element of the work machine 3, and configures the work machine 3 together with the machine body 30 and the like. In other words, the work machine 3 according to the present embodiment includes at least the control system 1, and the machine body 30 (including the traveling unit 31, the driving unit 34, and the work unit 33) on which the display device 2 is loaded.

A "screen" such as the display screen Dp1 mentioned in the present disclosure means a video (image) to be displayed on the display device 2, and includes an icon, a figure, a photo, a text, a moving image, and the like. In other words, the control system 1 is able to cause the display device 2 to display the display screen Dp1 including an icon and the like representing information related to an operating condition of the work machine 3 such as, for example, a traveling speed (vehicle speed) and a hydraulic oil temperature. Herein, in a case where the display screen Dp1 includes a moving image and the like, the display screen Dp1 does not include a fixed video and includes a video that changes moment by moment.

As illustrated in FIG. 3, the control system 1 includes an acquisition processing unit 11, and a display processing unit 12. In the present embodiment, as an example, the control system 1 includes, as a main component, a computer system including one or more processors. Therefore, when the one or more processors execute a work machine control program, these plurality of functional units (the display processing unit 12 and the like) are achieved. These plurality of functional units included in the control system 1 may be provided in a plurality of housings in a distributive manner, or may be provided in one housing.

The control system 1 is configured to be communicable with a device provided in each unit of the machine body 30. That is, the control system 1 is connected to at least the display device 2, the operation device 35, the cutoff lever 36, and the like. This allows the control system 1 to control the display device 2 and the like, and acquire an operation state of the display device 2, the operation device 35, the cutoff lever 36, and the like. Herein, the control system 1 may perform transmission and reception of various pieces of information (data) to and from each device directly, or may perform indirectly via a repeater or the like.

The acquisition processing unit 11 performs acquisition processing of acquiring information related to an operation state of the display device 2 and the operation device 35, and information related to a detection result of sensors for monitoring an operating condition of the machine body 30. That is, the control system 1 causes the acquisition processing unit 11 to accept various operations for controlling the work machine 3, and accept an output of sensors for monitoring an operating condition of the machine body 30 such as a charge state of a battery.

Specifically, the operation unit 22 of the display device 2 outputs an operation signal according to an operation of a user, whereby the acquisition processing unit 11 acquires the operation signal. Further, the acquisition processing unit 11 acquires a sensor signal from a hydraulic oil temperature sensor, and sensors that monitor an operating condition of the machine body 30, such as a charge state (a remaining amount and the like) of a battery. Data acquired by the acquisition processing unit 11 are stored, for example, in a memory or the like.

The display processing unit 12 performs display processing of causing the display device 2 to display various display screens Dp1. Specifically, the display processing unit 12 generates the display screen Dp1, based on data and the like to be acquired by the acquisition processing unit 11, and causes the display unit 23 of the display device 2 to display the display screen Dp1 by controlling the display device 2. Further, the display processing unit 12 is operated in response to an operation accepted by the operation unit 22 of the display device 2.

### [3] Control Method of Work Machine

Hereinafter, an example of a control method (hereinafter, simply referred to as a "control method") of the work machine 3 that is mainly performed by the control system 1 is described with reference to FIGS. 5 to 8.

A control method according to the present embodiment is performed by the control system 1 in which a computer system is a main component. In other words, the control method is embodied by a work machine control program (hereinafter, simply referred to as a "control program"). That is, a control program according to the present embodiment is a computer program for causing one or more processors to execute each piece of processing pertaining to the control method. A control program as described above may be executed, for example, by cooperation with the control system 1 and the display device 2.

Herein, the control system 1 performs the following various pieces of processing pertaining to the control method, in a case where a predetermined specific start operation for executing the control program is performed. The start operation is, for example, an activation operation and the like of the power source 4 (electric motor) of the work machine 3. Meanwhile, in a case where a predetermined specific finishing operation is performed, the control system 1 finishes the following various pieces of processing pertaining to the control method. The finishing operation is, for example, a stop operation and the like of the power source 4 of the work machine 3.

### [3.1] Display Screen

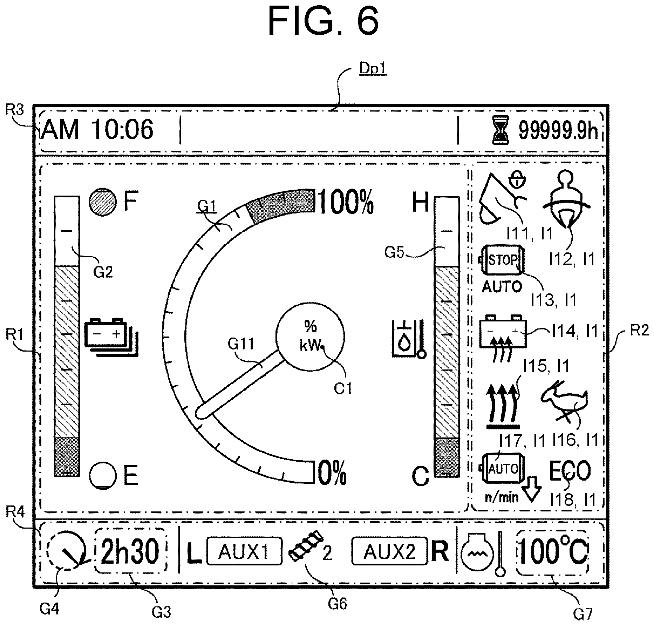

Herein, first, a configuration of the display screen Dp1 to be displayed on the display unit 23 of the display device 2 by the control method according to the present embodiment is described. In the drawing of FIG. 6 illustrating the display screen Dp1 to be displayed on the display unit 23 of the display device 2, a dotted-dash line, a leader line, and a reference sign representing an area are used merely for the purpose of explanation, and are not actually displayed on the display device 2.

The display screen Dp1 illustrated in FIG. 5 is a home screen to be displayed first by the control method. The home screen is a basic display screen Dp1 that is to be displayed first on the display device 2 during operation of the work machine 3. The display screen Dp1 can be shifted from a home screen to various display screens Dp1 including a menu screen, a setting screen, and the like according to an operation with respect to the operation unit 22.

As illustrated in FIG. 6, a home screen as the display screen Dp1 includes a first area R1, a second area R2 (an example of a "function display area"), a third area R3, and a fourth area R4.

Specifically, a home screen Dp11 is divided into three areas in a vertical direction (up-down direction). Further, the third area R3 is disposed in an uppermost area. The first area R1 and the second area R2 are disposed in this order from the left side within a middle area (second row from the top). The fourth area R4 is disposed in a lowermost area. The middle area (second row from the top) (including the first area R1 and the second area R2) is largest in size in a vertical direction among the three areas divided in the vertical direction. Since the third area R3 and the fourth area R4 are formed across between both side edges of a display area of the display unit 23 in a lateral direction (left-right direction), the third area R3 and the fourth area R4 are largest in size in a lateral direction.

However, the arrangement and the size of each of these areas are merely an example, and can be changed as appropriate. Further, dividing each area clearly by a borderline is not an essential matter. For example, also in an example in FIG. 6, while three areas divided in a vertical direction are clearly divided by a borderline, a borderline is not present between the first area R1 and the second area R2. Alternatively, for example, the first area R1 and the second area R2 may be clearly divided by a borderline.

A size of the first area R1 in a lateral direction (left-right direction) is set to be large, as compared with the second area R2. The first area R1 includes at least a center C1 of the display screen Dp1, and is a largest area among the first area R1 to the fourth area R4.

A first image G1 is displayed in the first area R1. The first image G1 represents information related to an output state of an electric motor as the power source 4. In the present embodiment, as an example, the first image G1 represents a magnitude of an output of the power source 4 (electric motor) by percentage.

That is, in the first area R1, an output state of the power source 4 of the work machine 3 can be displayed as the first image G1. The display processing unit 12 generates the first image G1 on the display screen Dp1, based on an output (sensor signal) of a sensor acquired by the acquisition processing unit 11.

In the present embodiment, the first image G1 is a graph simulating an analog meter. In the analog meter, a needle G11 rotates, and a value is presented by a position of the needle G11. That is, the first image G1 is information in which an output of an electric motor is expressed as an exponent, and representing by a position of the needle G11 in a graph. There is an advantage that displaying an output state of an electric motor by a graph provides good visibility to a user, and the user can intuitively understand the output state of the electric motor. The first image G1 may include not only a configuration in which an output state of an electric motor is represented by a numerical value or the like, but also a configuration in which an output state of an electric motor is stepwise represented, for example, by a pictorial pattern of an icon, or the like.

Further, a second image G2 is displayed in the first area R1. The second image G2 represents information related to a charge state of a battery that supplies electric power to an electric motor as the power source 4. In the present embodiment, as an example, the second image G2 represents a remaining capacity (state of charge: SOC) of a battery.

That is, in the first area R1, a charge state of a battery of the work machine 3 can be displayed as the second image G2. The display processing unit 12 generates the second image G2 on the display screen Dp1, based on an output (sensor signal) of a sensor acquired by the acquisition processing unit 11.

In the present embodiment, the second image G2 is a graph simulating a bar graph. The second image G2 is information in which a remaining amount (remaining capacity) of a monitoring target object (herein, a battery) is expressed as an exponent, and representing by a length (height) of a bar graph. There is an advantage that displaying a charge state of a battery by a graph provides good visibility to a user, and the user can intuitively understand the charge state of the battery. The second image G2 may include not only a configuration in which a charge state of a battery is represented by a numerical value or the like, but also a configuration in which a charge state of a battery is stepwise represented, for example, by a pictorial pattern of an icon, or the like.

In this way, the control method according to the present embodiment includes causing the display unit 23 of the display device 2 to display the display screen Dp1 including the first image G1 related to an output state of an electric motor, and the second image G2 related to a charge state of a battery.

Thus, a user (operator) can simultaneously recognize a current charge state (a remaining amount, and the like) of a battery, and a workload represented by an output state of an electric motor by viewing the display screen Dp1. Therefore, the user can work, while assuming operable hours of the work machine 3, for example, from a future working condition. Consequently, there is an advantage that appropriate information can be displayed in a case where the work machine 3 is electrified.

Further, at least one of the first image G1 and the second image G2 is a graph. In the present embodiment, particularly, at least both of the first image G1 and the second image G2 are a graph (an analog meter, a bar graph). This is advantageous in that good visibility is provided to a user, and the user can intuitively recognize at least one of an output state of an electric motor, and a charge state of a battery.

Further, the first image G1 is displayed next to the second image G2 on the display screen Dp1. In the present embodiment, as an example, the first image G1 and the second image G2 are disposed side by side in such a way as to be adjacent to each other in a lateral direction (left-right direction) on the display screen Dp1. More specifically, the first image G1 is disposed at a middle of the first area R1 in a lateral direction (left-right direction), and the second image G2 is disposed next to the left of the first image G1 in the first area R1.

This allows a user (operator) to visually recognize, by minimum eye movement, both of the first image G1 related to an output state of an electric motor, and the second image G2 related to a charge state of a battery, which are necessary for operating the work machine 3. Therefore, operability of the electrified work machine 3 is improved.

Moreover, in the present embodiment, a distance from the first image G1 to the center C1 of the display screen Dp1 is shorter than a distance from the second image G2 to the center C1 of the display screen Dp1. That is, the first image G1 is disposed at a position close to the center C1 of the display screen Dp1, as compared with the second image G2.

This makes it easy for a user (operator) to focus on the first image G1 rather than the second image G2, when viewing the display screen Dp1. Further, an output state of an electric motor represented by the first image G1 is information that is likely to constantly change during work by the work machine 3, as compared with a charge state of a battery represented by the second image G2. Allowing a user to focus on information (first image G1) that is likely to change as described above improves operability of the electrified work machine 3.

Further, a fifth image G5 is displayed in the first area R1. The fifth image G5 represents information related to a temperature (hydraulic oil temperature) of hydraulic oil to be discharged from the hydraulic pump 5 that is driven by an electric motor as the power source 4.

That is, in the first area R1, a temperature (hydraulic oil temperature) of hydraulic oil to be discharged from the hydraulic pump 5 can be displayed as the fifth image G5. The display processing unit 12 generates the fifth image G5 on the display screen Dp1, based on an output (sensor signal) of a sensor acquired by the acquisition processing unit 11.

In the present embodiment, the fifth image G5 is a graph simulating a bar graph. The fifth image G5 is information in which a hydraulic oil temperature is expressed as an exponent, and representing by a length (height) of a bar graph. There is an advantage that displaying a temperature of hydraulic oil by a graph provides good visibility to a user, and the user can intuitively understand the temperature of hydraulic oil. The fifth image G5 may include not only a configuration in which a temperature of hydraulic oil is represented by a numerical value or the like, but also a configuration in which a temperature of hydraulic oil is stepwise represented, for example, by a pictorial pattern of an icon, or the like.

Further, in the present embodiment, the fifth image G5 is displayed next to the first image G1 on the display screen Dp1. That is, the fifth image G5 related to a temperature of hydraulic oil to be discharged from the hydraulic pump 5 that is driven by an electric motor is displayed next to the first image G1 on the display screen Dp1. In the present embodiment, as an example, the first image G1 and the fifth image G5 are disposed side by side in such a way as to be adjacent to each other in a lateral direction (left-right direction) on the display screen Dp1. More specifically, the first image G1 is disposed at a middle of the first area R1 in a lateral direction (left-right direction), and the fifth image G5 is disposed next to the right of the first image R1 in the first area R1.

This allows a user (operator) to visually recognize, by minimum eye movement, both of the first image G1 related to an output state of an electric motor, and the fifth image G5 related to a temperature of hydraulic oil, which are necessary for operating the work machine 3. Therefore, operability of the electrified work machine 3 is improved.

Further, the second area R2 is a rectangular area having a length in a vertical direction (up-down direction). In the second area R2, an icon I1 associated with a function settable for the work machine 3 can be displayed. That is, the second area R2 is an example of a function display area in which the icon I1 can be displayed.

The icon I1 is displayed according to an operating condition of each unit of the work machine 3, and indicates any state of, for example, a battery, a seat belt, a cooling water temperature, a hydraulic oil temperature, and the like by a design (pictorial pattern) of the individual icon I1. Herein, for example, each icon I1 indicates an operating condition by a display mode of a display color, a size, or the like. The display processing unit 12 determines a state of each unit of the work machine 3 by using an output of various sensors that detect an operating condition of each unit of the work machine 3. Then, in a case where an abnormal value is detected in any of the units, the display processing unit 12 performs warning display by changing a display mode of a display color or the like of the icon I1 of the associated unit.

FIG. 6 illustrates a state in which icons I11 to 118 are displayed. The icon I11 indicates that the cutoff lever 36 is at an "up position". The icon I12 indicates a detection state of a seat belt. The icon I13 indicates that an auto stop function of the work machine 3 is on (valid). The icon I14 indicates that a warm-up function of a battery is on (valid). The icon I15 indicates that a reservation operation for warm-up of a battery is on (valid). The icon I16 indicates that the traveling unit 31 has two gear speeds. The icon I17 indicates that an auto deceleration function of the work machine 3 is on (valid). The icon I18 indicates that the work machine 3 is in an eco mode.

In this way, in the present embodiment, a function display area (second area R2) in which the icon I1 associated with a function settable for the work machine 3 can be displayed is disposed on a side (right side) opposite to the first image G1 with respect to the fifth image G5 on the display screen Dp1. This enables to visually recognize, on the display screen Dp1, an operation state of a function settable for the work machine 3.

Further, in the third area R3, for example, time information representing a current time, and operating hours information related to operating hours (hour meter) of the work machine 3 are displayed. In an example in FIG. 6, time information is disposed at a left end of the third area R3, and operating hours information is disposed at a right end of the third area R3.

Further, the fourth area R4 is a rectangular area having a length in a lateral direction (left-right direction). In the fourth area R4, a third image G3, a fourth image G4, a sixth image G6, and a seventh image G7 are displayed. In the present embodiment, as an example, the fourth image G4, the third image G3, the sixth image G6, and the seventh image G7 are displayed in this order from the left side.

The third image G3 represents information related to operable hours of the work machine 3. The operable hours of the work machine 3 are hours during which the work machine 3 is estimated to be continuously operable, and is derived, for example, by computation, based on a charge state (remaining amount) of a battery and an output state of an electric motor. The display processing unit 12 derives operable hours, based on a charge state (remaining amount) of a battery, and an output state of an electric motor, and generates the third image G3 on the display screen Dp1.

The fourth image G4 is an image for explaining the third image G3. That is, a fact that the third image G3 represents operable hours is explained by the fourth image G4. As an example, the fourth image G4 is an icon imitating a timer. In the present embodiment, as an example, the third image G3 and the fourth image G4 are disposed side by side in such a way as to be adjacent to each other in a lateral direction (left-right direction) on the display screen Dp1. More specifically, the fourth image G4 is disposed at a left end of the fourth area R4, and the third image G3 is disposed next to the right of the fourth image G4 in the first area R1.

In this way, the third image G3 related to operable hours of the work machine 3 is displayed below the second image G2 on the display screen Dp1. This allows a user (operator) to work, while assuming operable hours of the work machine 3, for example, from a future working condition.

Further, the fourth image G4 for explaining the third image G3 is displayed next to the third image G3 on the display screen Dp1. This makes it easy for a user (operator) to understand the meaning of the third image G3.

The sixth image G6 represents information related to an operating condition of the work unit 33. Specifically, the sixth image G6 represents a kind of an attachment mounted on the work unit 33.

The seventh image G7 represents information related to a temperature (cooling water temperature) of cooling water. That is, in the work machine 3, cooling water is circulated to cool an electric motor as the power source 4, an inverter for driving the electric motor, and the like. A temperature of the cooling water is represented by the seventh image G7.

Meanwhile, the third image G3 related to operable hours of the work machine 3 includes a first value and a second value of different units from each other. The first value and the second value are alternately switched as time elapses. In other words, on the display screen Dp1, the first value and the second value are alternately displayed each time a certain period of time elapses, as the third image G3 related to operable hours of the work machine 3.

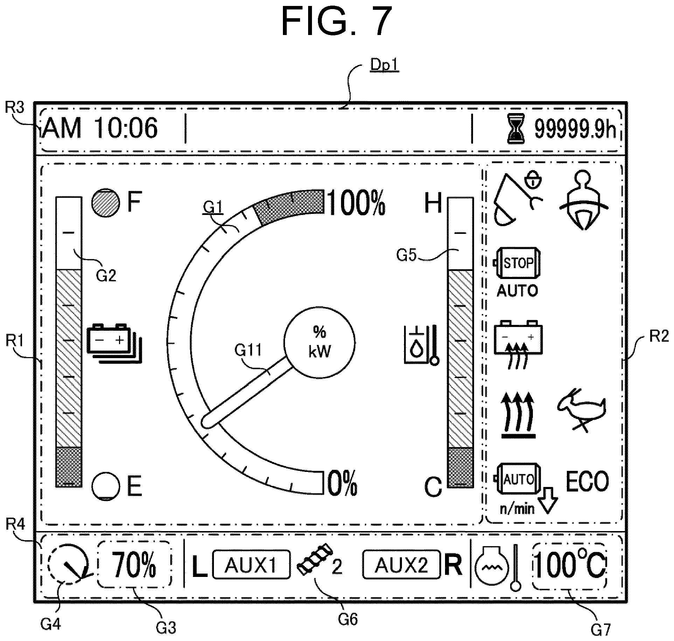

In the present embodiment, as an example, the first value represents operable hours in the unit of hours (h), as illustrated in FIG. 6, and the second value represents operable hours in the unit of percentage (%), as illustrated in FIG. 7. The second value represents that the work machine 3 can be operated for hours corresponding to the remaining percentage of hours, for example, in a case where hours during which the work machine 3 can be operated in a full charge state of a battery are assumed to be "100%".

According to this configuration, since a user can visually recognize operable hours of the work machine 3 by a plurality of modes, the user can easily understand the operable hours.

Meanwhile, a display mode of the first image G1 related to an output state of an electric motor as the power source 4 may be changed according to a state of the work machine 3. This allows a user to recognize a state of the work machine 3 by the display mode of the first image G1. The "display mode" mentioned herein includes, for example, various elements such as a color, a size, and a pictorial pattern.

For example, the display mode of the first image G1 is changed according to an operation mode of the work machine 3. The operation mode mentioned herein includes an auto idling mode, a boost mode, an eco mode, and the like. Changing the display mode of the first image G1 depending on these operation modes makes it easy for a user to recognize the operation mode of the work machine 3.

Further, the display mode of the first image G1 may be changed according to a state of the cutoff lever 36. That is, as far as the cutoff lever 36 is at an "up position", and the work machine 3 is in an operation disabled state, the state is notified to a user by changing the display mode of the first image G1. In this way, changing the display mode of the first image G1 depending on a state of the cutoff lever 36 makes it easy for a user to recognize the state of the cutoff lever 36.

### [3.2] Flowchart

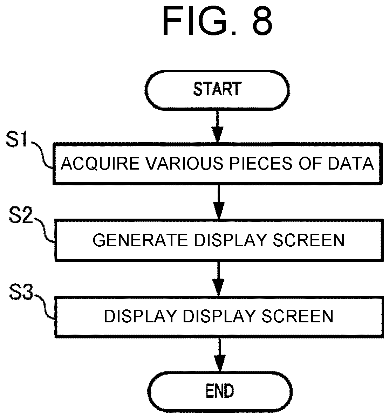

FIG. 8 is a flowchart illustrating an example of main processing pertaining to the control method according to the present embodiment.

As illustrated in FIG. 8, the acquisition processing unit 11 first acquires data related to a state of each unit of the work machine 3 that is reflected on the display screen Dp1, such as an output state of an electric motor as the power source 4, and a charge state of a battery (S1).

Subsequently, the display processing unit 12 generates the display screen Dp1 as a home screen, based on the acquired data (S2). At this occasion, the display processing unit 12 generates the display screen Dp1 including the first image G1, the second image G2, and the like.

Then, the display processing unit 12 causes the display device 2 to display the generated display screen Dp1 (S3). Thus, the display screen Dp1 as illustrated in FIGS. 6 and 7 is displayed on the display unit 23 of the display device 2.

The control system 1 repeatedly executes the above-described steps S1 to S3. Thus, the display screen Dp1 is updated. However, the flowchart illustrated in FIG. 8 is merely an example, and processing may be added or omitted as appropriate, or the order of processing may be changed as appropriate.

### [4] Modification Examples

In the following, modification examples of the first embodiment are described. The modification examples described below can be combined as necessary.

The control system 1 according to the present disclosure includes a computer system. The computer system includes, as a main component, one or more processors as hardware, and one or more memories. By causing the processor to execute a program recorded in the memory of the computer system, a function as the control system 1 according to the present disclosure is achieved. The program may be recorded in advance in the memory of the computer system, may be provided through an electrical communication line, or may be recorded in a non-transitory recording medium such as a memory card readable by the computer system, an optical disc, or a hard disk drive, and provided. Further, a part or all functional units included in the control system 1 may be configured of an electronic circuit.

Further, a configuration in which at least a part of the functions of the control system 1 is integrated within one housing is not essential in the control system 1, and constituent elements of the control system 1 may be provided in a plurality of housings in a distributive manner. Meanwhile, in the first embodiment, functions distributed in a plurality of devices (e.g., the control system 1 and the display device 2) may be integrated within one housing. Further, at least a part of the functions of the control system 1 may be achieved by a cloud (cloud computing) or the like.

Furthermore, the display device 2 is not limited to a dedicated device, and, for example, may be a general-purpose terminal such as a laptop computer, a tablet terminal, or a smartphone. Further, the mode of the display unit 23 is not limited to a mode in which a display screen is directly displayed like a liquid crystal display or an organic EL display. The display unit 23 may be configured to display a display screen by projection, for example, like a projector.

Further, as a configuration of information input of the operation unit 22, a configuration other than a push button switch, a touch panel, and an operation dial may be adopted. For example, the operation unit 22 may adopt a configuration including a pointing device such as a keyboard and a mouse, sound input, gesture input, or an input of an operation signal from another terminal.

Further, the power source 4 of the work machine 3 is not limited to an electric motor, and, for example, may be, a hybrid power source including an electric motor and an engine.

### REFERENCE SIGNS LIST

2 Display device
3 Work machine
4 Power source
5 Hydraulic pump
10 Work machine display system
12 Display processing unit
23 Display unit
30 Machine body
33 Work unit
36 Cutoff lever
Dp1 Display screen
G1 First image
G2 Second image
G3 Third image
G4 Fourth image
G5 Fifth image
I1 Icon
R2 Second area (function display area)

## Claims

1. A control method of a work machine provided with, as a power source that generates power for driving at least a work unit, an electric motor to be driven by electric power of a battery, the work machine control method comprising:
causing a display unit of a display device to display a display screen including a first image related to an output state of the electric motor, and a second image related to a charge state of the battery.

2. The work machine control method according to claim 1, wherein
at least one of the first image and the second image is a graph.

3. The work machine control method according to claim 1 or 2, further comprising
changing a display mode of the first image according to an operation mode of the work machine.

4. The work machine control method according to any one of claims 1 to 3, further comprising
changing a display mode of the first image according to a state of a cutoff lever.

5. The work machine control method according to any one of claims 1 to 4, wherein
the first image is displayed next to the second image on the display screen.

6. The work machine control method according to any one of claims 1 to 5, wherein
a third image related to operable hours of the work machine is displayed below the second image on the display screen.

7. The work machine control method according to claim 6, wherein
a fourth image for explaining the third image is displayed next to the third image on the display screen.

8. The work machine control method according to claim 6 or 7, wherein
the third image includes a first value and a second value of different units from each other, and
the first value and the second value are alternately switched as time elapses.

9. The work machine control method according to any one of claims 1 to 8, wherein
a distance from the first image to a center of the display screen is shorter than a distance from the second image to the center of the display screen.

10. The work machine control method according to any one of claims 1 to 9, wherein
a fifth image related to a temperature of hydraulic oil to be discharged from a hydraulic pump to be driven by the electric motor is displayed next to the first image on the display screen.

11. The work machine control method according to claim 10, wherein
a function display area in which an icon associated with a function settable for the work machine can be displayed is disposed on a side opposite to the first image with respect to the fifth image on the display screen.

12. A work machine control program that causes one or more processors to execute the work machine control method according to any one of claims 1 to 11.

13. A work machine display system comprising:
a display device for a work machine provided with, as a power source that generates power for driving at least a work unit, an electric motor to be driven by electric power of a battery; and
a display processing unit that causes a display unit of the display device to display a display screen including a first image related to an output state of the electric motor, and a second image related to a charge state of the battery.

14. A work machine comprising:
the work machine display system according to claim 13; and
a machine body on which the display device is loaded.
